# EUROPÄISCHE PATENTANMELDUNG

(11) **EP 2 851 347 A1**
(43) Veröffentlichungstag der Anmeldung: **25.03.2015**
(21) Anmeldenummer: 14002303.7
(22) Anmeldetag: 05.07.2014
(51) Int. Cl.: C03B 5/24, C03B 5/235, F23C 5/06

(54) **Verfahren zur Betriebsoptimierung einer als regenerative U-Flammenwanne mit zwei Feuerungsseiten ausgebildeten Glasschmelzwanne zur Glasherstellung mit Gasbrennern zur Temperierung eines in der Glasschmelzwanne befindlichen Glasbades sowie zugehörige Brenner**

(30) Priorität: 23.09.2013 DE 102013015672; 03.12.2013 DE 102013018090
(71) Anmelder: Gerresheimer Lohr GmbH, 97816 Lohr (DE)
(72) Erfinder: Buchmayer, Jörg, 97753 Karlstadt (DE)
(74) Vertreter: Springorum, Harald

(57) **Zusammenfassung**

Die vorliegende Erfindung betrifft sowohl

- ein Verfahren zur Betriebsoptimierung einer als regenerative U-Flammenwanne mit zwei Feuerungsseiten ausgebildeten Glasschmelzwanne zur Glasherstellung mit Gasbrennern zur Temperierung eines in der Glasschmelzwanne befindlichen Glasbades, wo zumindest eine Gasbrennerlanze **(4)** der Gasbrenner in ihrem vertikalen Anstellwinkel automatisch verstellbar ist, und wobei während des Betriebes der Glasschmelzwanne der vertikale Anstellwinkel **(40)** zumindest einer der Gasbrennerlanzen **(4)** der Gasbrenner zur Beeinflussung der Oberflächenbedeckung des Glasbades mit Gemenge **(46)** automatisch verstellt wird, als auch
- Gasbrenner für eine Glasschmelzwanne zur Durchführung des Verfahrens nach der vorliegenden Erfindung.

## Beschreibung

Die vorliegende Erfindung betrifft ein Verfahren zur Betriebsoptimierung einer als regenerative U-Flammenwanne mit zwei Feuerungsseiten ausgebildeten Glasschmelzwanne zur Glasherstellung mit Gasbrennern zur Temperierung eines in der Glasschmelzwanne befindlichen Glasbades sowie zugehörige Brenner. Insbesondere eignet sich das erfindungsgemäße Verfahren dabei zur Energieoptimierung und Reduzierung von brenntechnischen und prozesstechnischen Asymmetrien bei der Befeuerung der Glasschmelzwanne.

Die Beheizung von regenerativen U-Flammenwannen als der wohl verbreitetsten Form regenerativer Glasschmelzwannen erfolgt in der Regel durch zwei oder drei Gasbrennerlanzen, welche jeweils rechts und links quer zur Mittelachse der Schmelzwanne - von oben her in Aufsicht auf die Wanne gesehen - in Reihe unterhalb eines Brennerhalses installiert sind, also mit jeweilig einer Feuerungsseite links und einer anderen Feuerungsseite rechts von der vorgenannten Mittelachse gelegen.

Die Brennerlanzen einer U-Flammenwanne sind vorzugsweise oberhalb des Glasbades an der Rückwand der Schmelzwanne installiert. Unterhalb des Brennerhalses befinden sich zwei oder drei so genannte Brennersteine, welche sich kegelförmig in Richtung des Brennraumes oberhalb des Glasbades öffnen.

In der Regel ist vor dem Brennerstein eine mit Kühlrippen versehene Kühlplatte installiert, in der die Brennerspitze mittig passgenau eingesetzt wird.

Die Brennerlanze selbst wird mit Hilfe einer so genannten Brennerhalterung fixiert. Moderne Brennerhalterungen ermöglichen sowohl die manuelle Einstellung des vertikalen, als auch des horizontalen Anstellwinkels der Brennerlanze, etwa mit Hilfe von Verschraubungs- oder Klemmsystemen.

In der Regel wird die Einstellung der jeweiligen Brenner in Bezug auf den oder die Anstellwinkel der Brennerlanze (auch Brennerwinkel genannt) nach Inbetriebnahme durch Fachpersonal des Ofenbauers vorgenommen. Dabei steht im Vordergrund, mit dem Kunden vereinbarte Leistungskennzahlen des Ofens zu erreichen (z.B. Abgaswerte, Energieverbrauch u.a.).

Im weiteren Verlauf (also im Betrieb der Glasschmelzwanne) werden die Brennerwinkel dann nicht mehr oder allenfalls in ganz seltenen Fällen verändert. Eine solche Änderung ist auch aufwendig, muß sie doch manuell durch einen Bediener durch Änderung des Brennerwinkels am Brennerhalter erfolgen. Dabei wird der Brenner zuerst in der Halterung gelöst, seine Position wie gewünscht verändert und anschließend wieder in der Halterung fixiert. Diese Änderung kann in der Regel nur unter Zeitdruck und bei hohen Temperaturen in entsprechender Schutzkleidung und auch nur dann erfolgen, wenn an der Brennerseite (Feuerungsseite der Glasschmelzwanne), an der die Änderung vorgenommen werden soll, gerade kein Brennvorgang aktiv ist.

Die Beheizung von regenerativen U-Flammenwannen erfolgt nämlich zyklisch durch zwei zeitlich begrenzte Brennzyklen zwischen der rechten und linken Feuerungsseite der Glasschmelzwanne, die sich fortlaufend wiederholt gegenseitig abwechseln. Die Brennzyklen dauern dabei vorzugsweise zwanzig bis fünfundzwanzig Minuten.

Hinter der Schmelzwanne befinden sich brennerseitig zwei - zumeist rechteckig aufgebaute-Regeneratoren, die durch eine (Mittel-)wand voneinander getrennt sind. Die Regeneratoren sind über jeweils den ihnen zugehörigen Brennerhals mit dem oberhalb des Glasbades gelegenen Brennraum der Schmelzwanne verbunden.

Der bereits erwähnte Brennerhals ist ein in Richtung des Brennraumes der Schmelzwanne abgewinkelter Kanal, durch die in dem ihm zugehörigen Regenerator vorgewärmte Verbrennungsluft in den Brennraum gelangt, sich dort mit dem Brennstoff vermischt und Flammen erzeugt, die sich vorzugsweise in etwa parallel zur Längsachse des Brennraumes ausdehnen.

Die Regeneratoren (Kammern) enthalten eine so genannte Kammergitterung. Dabei handelt es sich um Hohlsteine oder Kreuzsteine, welche zu vertikalen Kanälen (Zügen) aufgebaut sind und die Regeneratoren bis zur Brennerhalsunterkante ausfüllen.

Das Abgas der Schmelzwannen durchströmt diese Züge in vertikaler Richtung von oben nach unten und gibt einen Großteil der Abgaswärme (bis zu 70%) an die Hohlsteine ab, wenn die Brenner unterhalb des diesem Regenerator zugehörigen Brennerhalses gerade nicht in Betrieb sind. Die Regeneration erfolgt sodann dadurch, daß im darauffolgenden Brennzyklus kalte Verbrennungsluft mittels eines Verbrennungsluftventilators in umgekehrter Richtung durch die aufgeheizten Kammerzüge geleitet wird (vorzugsweise von unten nach oben). Dabei erhitzt sich die Verbrennungsluft vorzugsweise auf über 1450°C. Die Verbrennungsluft liefert den zur Verbrennung notwendigen Sauerstoffgehalt. Das Verhältnis zwischen Verbrennungsluft- und Brennstoffmenge beträgt vorzugsweise ca. 10,5:1 und ist abhängig vom Brennwert des Brennstoffes.

Im Brennzyklus von rechts sind die Brenner auf der rechten Seite in Betrieb, werden mit vorgewärmter Verbrennungsluft aus der rechten Kammer beaufschlagt und geben die Abgaswärme an die gegenüberliegende linke Kammer ab. Im Brennzyklus von links läuft dieser Vorgang sinngemäß umgekehrt ab.

Der Flammen- und/oder Abgas-Weg im Brennraum beschreibt dabei in etwa die Form eines "U", woraus sich in Verbindung mit dem regenerativen Prinzip die Bezeichnung *"regenerative U-Flammesanwasane"* ableitet.

Die Flamme entsteht durch das örtliche Zusammenführen des Brennstoffes Erdgas (oder HES), welcher durch eine oder mehrere quer zur Längsachse der Schmelzwanne und oberhalb des Glasbades angebrachte Brenner zugeführt wird und der ca. 10-fachen, im Regenerator vorgewärmten Menge an Verbrennungsluft.

Im Brennraum (oberhalb des Glasbades) führt die entstehende Wärme zum Aufschmelzen des Gemenges auf dem Glasbad. Ein Großteil der Wärmemenge wird dabei in die Glasschmelze übertragen.

Auf der den Brennerhälsen gegenüberliegenden Seite der Glasschmelzwanne befindet sich eine abgrenzende Stirnwand, wo auch der Durchlaß des Glasbades zum Speiser (Riser) hin, also etwa zu den Glasformmaschinen gelegen ist.

Das Becken der Glasschmelzwanne, das das Glasbad aufnimmt, ist innen, durch einen unterhalb des Glasbadspiegels verbleibenden Wall in zwei Bereiche unterteilt, nämlich
- einerseits in die eigentliche Schmelzwanne, die zur Unterstützung bzw. Beschleunigung des Schmelzprozesses am Boden noch durch Elektrodenlöcher geführte sogenannte Booster-Elektroden zur optionalen zusätzlichen Temperierung - mit vorzugsweise bis zu 15 % der Gesamtenergie - des Glasbades aufweist, und
- andererseits den hinter dem Wall zum Durchlaß hin gelegenen Läuterbereich des Beckens, in dem die Eliminierung störender Gasblasen (CO₂), die durch das Aufschmelzen karbonathaltiger Glasrohstoffe wie etwa Kalk, Dolomit oder Soda in die Glasschmelze gelangen und die hier durch den Vorgang der so genannten "Läuterung" nämlich durch Abwarten bis zum (weitgehenden) Entweichen der Gasblasen - womöglich beschleunigt, etwa durch Zugabe von Sulfat - entfernt werden.

Das Gemenge, also der Rohstoff zur Glasherstellung, wird der Glasschmelzwanne über eine in einem Einlegebereich (sogenanntes Doghouse) befindliche Einlegemaschine zugeführt. Der Einlegebereich ist vorzugsweise an der Wand angeordnet, die senkrecht zu Stirnwand und der Wand steht, die Brenner und Brennerhälse aufweist, etwa in der Nähe der Brenner. Vorzugsweise, aber - etwa infolge Platzmangels - nicht immer, sind dabei zwei - etwa einander gegenüberliegende-Einlegebereiche vorgesehen.

Die Beheizung einer regenerativen U-Flammenwanne zur Glasherstellung beruht folglich wesentlich auf einem spiegelsymmetrischen Prinzip. Die Spiegelachse ist dabei die Mittelachse - vorzugsweise die Längsachse - der Schmelzwanne in Glasflußrichtung. Die Effizienz dieses Systems hängt dabei maßgeblich von der Aufrechterhaltung dieser Symmetrie im Betrieb ab, was jedoch aufgrund einer Vielzahl prozeßtechnischer Einflußfaktoren nicht immer einfach ist.

### Die Gründe hierfür sind vielschichtig:

U-Flammenwannen werden kontinuierlich unterbrechungsfrei betrieben, da sie - abgesehen von sehr kostenträchtigen Reparatureinsätzen - nicht ohne weiteres heruntergefahren werden können. Aufgrund der oftmals hohen Kapazität moderner U-Flammenwannen (bis zu 400 Tagestonnen Glas) unterliegen diese Schmelzaggregate einer hohen Trägheit. Reaktionen des Systems auf Änderungen von Regelparametern treten deshalb mit einem gewissen Zeitverzug auf. Dieser Zeitverzug wird als "Totzeit" bezeichnet

Gleichzeitig unterliegen Glasschmelzwannen aufgrund der Artikelbelegung der Glasproduktionsmaschinen sich ständig ändernden Belastungssituationen in Bezug auf die Menge des zu erschmelzenden Glases (Tonnage/ Tag).

Es handelt sich also grundsätzlich um dynamische Systeme. Dies hat zur Folge, daß in der Regel, abhängig von der Belastung die Betriebsweise der Schmelzaggregate stetig angepasst werden muß.

Aufgrund der kontinuierlichen ununterbrochenen Betriebsweise sinkt bei zunehmender Belastung (Tonnage/ Tag) die Verweilzeit des Glases innerhalb der Glasschmelzwanne. Da die Glasschmelze jedoch ein u.a. zeitabhängiger Prozeß ist, bei welchem dem Glas eine bestimmte Energie innerhalb der Verweilzeit zugeführt werden muß, und der Tatsache, daß die Masse der Glasschmelze im Schmelzaggregat aufgrund der Bauweise unveränderlich ist, muß bei höherer Belastung der Energieintrag erhöht werden, um den Verweilzeitverlust zu kompensieren. Im umgekehrten Fall, also bei Reduzierung der Belastung ist sinngemäß der Energieeintrag zu senken.

Bei zunehmender Belastung muß ebenfalls eine größere Menge Gemenge in gleicher Zeit in die Glasschmezwanne eingebracht werden. Da auch die Glasbadoberfläche eine baulich bedingt unveränderliche Größe ist, vergrößert sich in der Regel die Flächenbedeckung auf der Glasbadoberfläche und/oder die Auftragshöhe des Gemenges (Höhe der Gemengehaufen) steigt. Dieser Vorgang hemmt den durch die Befeuerung im Brennraum erzeugten Energieeintrag in die Glasschmelze. In Folge dessen sinkt die Glasbadtemperatur (Bodentemperatur) und der Energieeintrag muß erhöht werden.

Die Verweilzeit und der Energieeintrag haben zudem auch starken Einfluß auf die Qualität des Glases in Bezug auf die Eliminierung störender Gasblasen in der Glasschmelze. Die Gasblasen (CO₂) entstehen durch die Schmelze karbonathaltiger Glasrohstoffe (wie Kalk, Dolomit oder Soda) und sollen durch den Vorgang der sogenannten *'Läuterung'* entfernt werden. Die Läuterung hängt u.a. von der Verweilzeit des Glases in der Glasschmelzwanne ab. Bei hoher Belastung sinkt die Verweilzeit und der Entgasungsvorgang ist weniger effektiv. Die Entgasung der Schmelze hängt weiterhin auch von der Viskosität dieser ab. Bei höherer Glas-Temperatur sinkt die Viskosität, was zur Folge hat, daß die Auftriebsgeschwindigkeit der Blasen in der Glasschmelze zunimmt. Aus diesem Grund werden die Glasbadtemperaturen bei höheren Belastungen in der Regel auch höher gefahren als bei niedrigeren Belastungen.

Um angesichts dieser schwierigen Prozeßverhältnisse die vorgenannte spiegelsymmetrische Betriebsweise einer U-Flammenwanne im Betrieb aufrecht zu erhalten, bedient man sich nach dem Stand der Technik einer Reihe von Steuer- und/oder Regelsystemen, die bei modernen Glasschmelzwannen in der Regel in so genannten Prozessleitsystemen integriert sind.

Dabei werden mit Hilfe von - vorzugsweise softwarebasierten - Reglern Führungsgrößen, wie etwa Temperaturen, Ofendrücke, Glasstand, Brennstoffmengen u.a. durch den jeweiligen Regler in einem vorgegebenen Sollwertbereich gehalten.

Das Prinzip beruht darauf, für eine Führungsgröße - etwa der angestrebten Brennraumtemperatur - einen Sollwert - etwa 1550 °C - vorzusehen (W-Wert), die Regelgröße - etwa die tatsächlich gemessene Brennraumtemperatur- kontinuierlich zu erfassen - also etwa aktuell 1520°C-(X-Wert) und diese jeweils gemessene Regelgröße (auch Istwert genannt) - in Differenzbetrachtung zum aktuellen Sollwert - hier also minus 30°C Abweichung vom Sollwert - einem Regler - etwa einem PID-Regler - rück-zuzuführen, der sodann in Abhängigkeit der Abweichung - hier minus 30 °C - des aktuell gemessenen und rückgeführten Wertes der Regelgröße - hier 1520 °C - vom aktuellen Sollwert der Führungsgröße - hier 1550 °C - einen aktuellen Wert für einer Steuergröße - etwa eine elektrische Spannung - erzeugt (Y-Wert), der ein Stellglied - etwa ein elektrisch zu öffnendes Ventil - ansteuert, das sodann eine die Regelgröße beeinflussende Stell-größe - etwa den Grad der Öffnung eines bestimmten Leitungsquerschnitts einer Brennstoffleitung und damit (ausreichenden Druck vorausgesetzt) die einem Brenner zugeführte Brennstoffmenge - hervorruft. Hier wird also der Wert der aktuellen Steuergröße (Y-Wert) - hier also die elektrische Spannung - an das Stellglied, also die "Hardwareeinheit" - hier ein elektrisch zu öffnendes (und zu schließendes) Ventil - übermittelt, welches den eigentlichen Stellvorgang ausführt - hier das Öffnen der Gaszufuhr -.

Die Aufgabe des Reglers ist es somit, die Regelgröße auf den für die Führungsgröße gerade vorgegebenen Sollwert (W-Wert) zu halten, wobei hier in der Regel jeder Regelgröße ein gewisser Toleranzbereich zugeordnet ist.

Diese Art der Regelung erfolgt zwar - wie bereits erwähnt - zumeist über ein Prozeßleitsystem, das in einer Leitwarte zentral alle Regelkreise mit ihren jeweils aktuellen Daten (also etwa Sollwert der Führungsgröße, aktueller Wert der Steuergröße, aktueller Wert der Stellgröße, Istwert der Regelgröße) zur Anzeige und - soweit technisch möglich - Änderung vorhält, sie setzt dabei die Vorgabe eines jeweiligen Sollwertes für die Regelkreise durch einen Bediener voraus und erfolgt insofern manuell und nicht automatisch, als daß sich der aktuelle Wert der Regelgröße erst ändert, nachdem der Bediener eine Sollwertänderung vorgenommen hat.

Neben dieser Regelung durch Prozessleitsysteme können im Falle der Verwendung moderner Gasbrennerlanzen die o.g. Vorgänge auch durch Veränderungen an deren Einstellparametern beeinflußt werden. So verfügen nämlich solche modernen Gasbrennerlanzen über die Möglichkeit, die Flammengeometrie zu verändern. Durch etwa die Veränderung des Gasdruckes insgesamt, bzw. durch die Veränderung des Gasdurchflusses zwischen Innen- und Außendüse kann das Flammenbild während des Betriebes beeinflußt werden.

Insgesamt versucht man so etwa vorzugsweise folgende Glasschmelzprozessparameter zu steuern oder zu regeln:
- Gewölbe-Temperatuen(-en) des Gewölbes der Glasschmelzwanne (oberhalb des Glasbades),
- Boden-Temperatur(-en) der Glasschmelzwanne (im Glasbad am Boden),
- Speiser-Temperatur (-en) [Riser-Temperatur(-en)],
- Kammer-Temperaturen(-en; Kammerkopf und Kammerfuß), also die Temperatur(-en) in den Regeneratoren,
- Abgaskanaltemperatur (-en),
- Brennstoff-Luft-Verhältnis,
- Steuerparameter der Einlegemaschine,
- Gasmenge
- Stromeintrag/Booster-Leistung(-en) für die (zusätzliche) Elektrodenheizung am Wannenboden,
- Gesamtenergieeintrag,
- Energiekosten durch Gesamt-Energieeintrag,
- Glasqualität (Gispenanzahl [Zahl der Gasblaseneinschlüsse pro Volumeneinheit des erzeugten Glases]).

Dennoch kann es zu Situationen im Betrieb der Glasschmelzwanne kommen, die mit den vorgenannten Beeinflussungsmöglichkeiten des Glasschmelzprozesses nach dem Stand der Technik nur unbefriedigend zu lösen sind.

Hierzu zählen Asymmetrien, die den Verbrennungs- und Glasschmelzprozeß, den Energieeintrag, die Energiekosten und die Glasqualität negativ beeinflussen, wie etwa
- unterschiedliche Gewölbetemperaturen bei rechtsseitigem und linksseitigem Brennzyklus,
- unterschiedliche Bodentemperaturen bei rechtsseitigem und linksseitigem Brennzyklus,
- unterschiedliche Kammer(Regenerator)-Temperaturen (an Kammerkopf und an Kammerfuß) bei rechtsseitigem und linksseitigem Brennzyklus,
- unterschiedliche Gemengebedeckungen auf der Glasbadoberfläche bei rechtsseitigem und linksseitigem Brennzyklus,
- sowie ungünstige Gemengelagen in der Form, daß das Gemenge zu weit in den vorderen Bereich des Schmelzofens schwimmt (zwischen Wall und Stirnwand).

Diese Asymmetrien können dabei brenntechnischer aber auch prozesstechnischer Ursache sein, etwa aufgrund baulicher Situationen, wie etwa
- Glasschmelzwannen mit nur einem Einlegebereich (sogenanntes Doghouse) anstelle zweier symmetrisch gegenüberliegender Einlegebereiche,
- unsymmetrischer Verlauf der Abgaskanäle, oder
- beschädigter oder teilweise verstopfter Regeneratoren.

Die vorgenannten Asymmetrien können den Verbrennungsprozess negativ beeinflussen, indem kurzzeitig, schlechterenfalls langfristig auftreten oder sich sogar permanent manifestieren, schlechtestenfalls sich womöglich sogar im Zeitverlauf verstärken (Drift). In Folge dessen kann hierdurch die Effizienz der Glasschmelzwanne in erheblichem Maße negativ beeinflußt werden. Von daher ist es geboten, derartigen Asymmetrien in der Glasschmelzwanne entgegenzuwirken.

Solche, während des Betriebes auftretende Asymmetrien sind jedoch mit den herkömmlichen, insbesondere den vorgenannten Mitteln zur technischen Beeinflussung, also etwa Steuerung oder Regelung der nach dem Stand der Technik bekannten technischen Einflußgrößen (Brennstoffzufuhr, Einstellparameter der Einlegemaschine etc.) nicht immer wirkungsvoll, insbesondere nicht immer in der gewünschten Geschwindigkeit zu beseitigen, was infolge zu den bereits angeführten erheblichen Nachteile dieser Effekte, mithin also einer negativen Beeinflussung des Verbrennungs- und Glasschmelzprozesses, des Energieeintrags, der Energiekosten und der Glasqualität zumindest für eine gewisse Zeit führt.

Vor diesem Hintergrund ist es daher Aufgabe der vorliegenden Erfindung den Betrieb eines Glasschmelzprozesses in einer als regenerative U-Flammenwanne mit zwei Feuerungsseiten ausgebildeten Glasschmelzwanne mit Gasbrennern zur Temperierung so zu verbessern, daß auch solchen während des Betriebes der Glasschmelzwanne auftretenden, brenntechnisch oder prozeßtechnisch bedingten Assymmetrien, die den Verbrennungs- und Glasschmelzprozeß, den Energieeintrag, die Energiekosten und die Glasqualität negativ beeinflussen können, effektiver entgegengewirkt werden kann.

Dies wird sowohl durch ein Verfahren nach Anspruch 1, als auch durch zugehörige, der Verfahrensdurchführung dienende Gasbrenner nach Anspruch 12 und 14 gelöst.

Vorteilhafte Ausführungsformen der vorliegenden Erfindung ergeben sich dabei aus den Unteransprüchen.

In einer bevorzugten Ausführungsform wird das Verfahren nach der vorliegenden Erfindung für eine U-Flammenwanne zur Glasherstellung dazu eingesetzt, die bereits erwähnte Oberflächenbedeckung der Glasschmelze in der U-Flammenwanne durch die automatische Verstellung des vertikalen Anstellwinkels zumindest einer der Gasbrennerlanzen so zu beeinflussen, daß Asymmetrien in der Oberflächenbedeckung des Glasbades mit Gemenge zwischen den beiden Feuerungsseiten der U-Flammenwanne - vorzugsweise möglichst rasch - reduziert werden.

Dies geschieht besonders bevorzugterweise dadurch, daß auf der Feuerungsseite der U-Flammenwanne, wo eine größere Bedeckung des Glasbades vorliegt, eine Erhöhung des vertikalen Anstellwinkels zumindest einer der Gasbrennerlanzen auf dieser Feuerungsseite erfolgt und/oder indem auf der jeweiligen anderen Feuerungsseite der U-Flammenwanne, wo eine geringere Bedeckung des Glasbades vorliegt, eine Verminderung des vertikalen Anstellwinkels zumindest einer der Gasbrennerlanzen auf der dortigen Feuerungsseite erfolgt und zwar solange, bis die Asymmetrie zwischen den beiden Feuerungsseiten in der Oberflächenbedeckung des Glasbades durch Gemenge unter ein festgelegtes Maß gesunken ist.

Die Oberflächenbedeckung des Glasbades mit Gemenge kann - auch selektiv für bestimmte interessierende Flächenbereiche der Glasbadoberfläche - heute leicht durch ein entsprechendes digitalkamerabasiertes Meßsystem erfaßt werden, wie es etwa mit dem ES III (Marke) Kamerasystem der Firma Glass Service am Markt zur Verfügung steht. Hierzu kann etwa jeweils eine Kamera vorgenannter Art oberhalb der Brennerhälse installiert und von hier auf die Oberfläche des Glasbades gerichtet werden, wobei eine entsprechende mathematische Korrektur der Perspektive zu korrekten Flächenberechnungen der Glasbadoberfläche und ihres Bedeckungsgrades führt. Es sind jedoch auch Kameras - etwa vorgenannten Systems - verfügbar, die ausreichend hitzebeständig sind, um auch unmittelbar über dem Glasbad im Gewölbe installiert zu werden und so eine direkte Aufsicht auf das Bad zu ermöglichen, was noch bessere Meßergebnisse des Oberflächenbedeckungsgrades ermöglicht. All dies eignet sich vorzugsweise zur Durchführung des erfindungsgemäßen Verfahrens, besonders bevorzugterweise für die vorstehend dargestellten Ausführungsformen, die die Oberflächenbedeckung der Glasschmelze mit Gemenge - bevorzugterweise in bestimmten (etwa den Feuerungsseiten entsprechenden) Bereichenerfassen.

So kann, neben den bereits aus dem Stand der Technik bekannten Einflußnahmemöglichkeiten wie etwa der Änderung die Brennzykluszeit oder der Änderung des Brennstoff-Luft-Verhältnisses, auch die nach der vorliegenden Erfindung erstmals erkannte Steuergröße des vertikalen - und vorzugsweise auch horizontalen - Anstellwinkels der Gasbrennerlanze auch zur (vorzugsweise raschen) Reduzierung der vorgenannten Asymmetrien verwendet werden, was die entsprechenden, bereits erläuterten Nachteile des Glasschmelzprozesses zu meiden oder doch zumindest zu reduzieren hilft.

Ebenfalls kann während des Betriebes der Glasschmelzwanne der vertikale Anstellwinkel zumindest einer der Gasbrennerlanzen der Gasbrenner auch zur Beeinflussung zumindest eines weiteren Glasschmelzprozeßparameters automatisch verstellt werden.

Vorzugsweise ist bei dem erfindungsgemäßen Gasbrenner auch ein automatisches Stellmittel zur Verstellung des horizontalen Anstellwinkels der Gasbrennerlanze vorgesehen, wobei eine solche Ausführungsform auch der Durchführung einer Ausführungsform des Verfahrens nach der vorliegenden Erfindung dient, bei der während des Betriebes der Glasschmelzwanne auch der horizontale Anstellwinkel zumindest einer der Gasbrennerlanzen der Gasbrenner zur Beeinflussung zumindest eines der Glasschmelzprozessparameter - besonders bevorzugterweise auch zur Beeinflussung der Gemengeabdeckung des Glasbades - automatisch verstellt wird.

Der vorliegenden Erfindung liegt dabei die erfinderische Erkenntnis eines zentralen Wirkprinzips zugrunde: Der vertikale - und vorzugsweise auch der horizontale - Anstellwinkel der Gasbrennerlanze hat einen Einfluß auf die Vorgänge im Brennraum oberhalb des Glasbades (also im sogenannten Oberofen oder auch Gewölbe) ebenso wie die nachgeschalteten Aggregate (Regeneratoren, Abgas etc.) direkt oder indirekt, unmittelbar oder mit einem prozessbedingten Zeitversatz (sogenannte Totzeit). Er halt also Einfluß auf die Parameter des Glasschmelzprozesses, vorzugsweise auf:
- die Temperatur(-en) im Gewölbe der Glasschmelzwanne,
- die Boden-Temperatur(-en) der Glasschmelzwanne,
- die Temperatur(-en) der Glasschmelze am Speiser (Riser) der Glasschmelzwanne,
- die Kammer-Temperaturen(-en) der Regeneratoren der Glasschmelzwanne;
- die Abgaskanaltemperatur(-en) im Abgaskanal der Glasschmelzwanne,
- die Oberflächenabdeckung (den Oberflächenbedeckungsgrad) des Glasbades in der Glasschmelzwanne mit Gemenge,
- die Gasmenge,
- den Stromeintrag/Booster-Leistung(-en),
- den Gesamtenergieeintrag,
- Energiekosten bei bekanntem Preis pro Energieeinheit, und/oder
- die Glasqualität anhand einer bestimmten Gispenzahl pro Volumeneinheit im erzeugten Glas.

Der vertikale - und vorzugsweise auch der horizontale - Anstellwinkel der jeweiligen Gasbrennerlanze(Brennerwinkel) wird somit nach der vorliegenden Erfindung genutzt, um Prozeßparameter des Glasschmelzprozesses, vorzugsweise die vorstehend angeführten Parameter zu beeinflussen, um so zu
- einer Verbesserung des Verbrennungsprozesses, und/oder
- einer Energie- und/ oder Kostenoptimierung, und/oder
- der Reduzierung von brenntechnischen oder/ und prozesstechnischen Asymmetrien von regenerativen Glasschmelzwannen zu gelangen.

Dieser Einfluß des jeweiligen vertikalen Brennerwinkels ist dabei physikalisch wie folgt zu erklären:
Die Anstellung der vertikalen Anstellwinkel der Gasbrennerlanzen (auch Brennerwinkel genannt) erfolgt in der Regel in einer Spannweite von null bis zehn Grad (nach oben), vorzugsweise auch bis zu zwanzig Grad (nach oben).

Eine derartige Verstellung des vertikalen Brennerwinkels hat nun verschiedene Effekte, wobei zwischen kurzzeitigen Wirkungen einerseits und längerfristigen Effekten andererseits auf die Prozeßparameter des Glasschmelzprozesses zu unterscheiden ist.

Als kurzzeitiger Effekt (Minuten bis mehrere Stunden) tritt mit zunehmender Erhöhung des vertikalen Anstellwinkels einer jeweiligen Gasbrennerlanze nach oben (Gradzahl wird erhöht) der Anstieg sowohl der Brennraumtemperatur des Ofens (sogenannte Gewölbetemperatur) als auch der Glasbadtemperatur (sogenannte Bodentemperatur) ein. In dem nachgeschalteten, der Brennseite gegenüberliegenden Regenerator sinkt hingegen die Temperatur (sogenannte Kammerkopf- und/oder Kammerfußtemperatur im dortigen Regenerator). Der Energieeintrag bleibt jedoch unverändert gleich.

Als langzeitiger Effekt (mehrere Stunden bis Tage) ist ein Absinken der Kammertemperaturen (also der Temperaturen in den Regeneratoren) infolge der Erhöhung des vertikalen Anstellwinkels der Gasbrennerlanze zu beobachten. Die Regeneratoren kühlen über mehrere Brennzyklen schrittweise langsam auf eine niedrigere Temperatur ab. Dies führt zu einer Reduzierung der Verbrennungsluft-Vorwärmung und somit dazu, daß der positive Temperaturerhöhungseffekt durch die Erhöhung des Anstellwinkels auf den Brennraum teilweise wieder aufgehoben wird, was es zu bedenken gilt.

Das Verfahren zur Betriebsoptimierung einer regenerativen Glasschmelzwanne zur Glasherstellung nach der vorliegenden Erfindung ist vorzugsweise so ausgestaltet, daß die Betriebsoptimierung durch Beeinflussung zumindest eines der Glasschmelzprozessparameter über die automatische Verstellung des vertikalen Anstellwinkels zumindest einer der Gasbrennerlanzen der Gasbrenner während des Betriebes der Glasschmelzwanne im Wege einer Regelung erfolgt, bei der zumindest einer der Glasschmelzprozessparameter als Regelgröße sowie der vertikale Anstellwinkel zumindest einer der Gasbrennerlanzen der Gasbrenner als Steuer- oder Stellgröße dient. In gleicher Weise kann auch der horizontale Anstellwinkel zumindest einer der Gasbrennerlanzen der Gasbrenner bevorzugterweise als Steuer- oder Stellgröße dienen. Bei einer solchen Regelung ist nach der vorliegenden Erfindung zudem bevorzugterweise vorgesehen, daß dabei zumindest einer der Glasschmelzprozessparameter als Führungsgröße der Regelung dient.

Durch die Regelung des Brenner-Anstellwinkels kann so mit Hilfe einer geeigneten Regelung ein angestrebter Regelzustand hinsichtlich der hierfür gewählten Führungsgröße erzielt werden. Es versteht sich, daß auch eine derartige Regelung nach der vorliegenden Erfindung in ein, vorzugsweise aus einer Leitwarte bedienbares, Prozeßleitsystem, wie bereits oben angeführt, integriert werden kann.

Gleichwohl kann dies nach einer besonders bevorzugten Ausführungsform der vorliegenden Erfindung noch erheblich verbessert werden. Wie bereits dargestellt, setzt aber diese Art der Führung des Glasschmelzprozesses nach wie vor die Vorgabe eines jeweiligen Sollwertes für die Regelkreise durch einen Bediener voraus und erfolgt insofern noch manuell und nicht automatisch, da sich der aktuelle Wert der Regelgröße erst dann ändert, wenn der jeweilige Bediener eine Sollwertänderung vornimmt.

Bevorzugterweise können nach der vorliegenden Erfindung mit gehobenen Methoden der Prozeßführung (sogenannte *Advanced Process Control, APC*) und hierbei besonders bevorzugterweise mit *'modellbasierten prädiktivesa Regelsystemen'* (sogenannte *Model Predictive Control, MPC*) Glasschmelzwannen auch vollautomatisch betrieben werden (vgl. hierzu etwa Dittmar, Rainer und Pfeiffer, Bernd-Markus, Modellbasierte prädikative Regelung in der industriellen Praxis, Automatisierungstechnik 54 (2006), S. 590 - 609). Darüber hinaus können auch hierbei nicht direkt mit dem Prozeß verknüpfte Regelparameter verarbeitet werden (wie z.B. Energieverbrauch, Energiekosten (bei bekanntem Preis pro Einheit) u.a.).

Bei derartigen modellbasierten prädiktiven Regelsystemen finden mathematische Modelle Verwendung, welche die Auswirkungen einer Regelparameteränderung (Y-Wert) auf Messgrößen (X-Wert) erfassen und fortlaufend im Betrieb der Anlage automatisch anwenden. Dadurch wird eine gewissermaßen *'intelligente'* Fahrweise der Glasschmelzwanne ermöglicht, welche in der Lage ist, nicht nur einen, sondern vielmehr eine Vielzahl von Parametern des Glasschmelzprozesses parallel als Regelgröße(n) zu verwenden (und zu regeln) und ebenso auch eine Vielzahl von direkt oder indirekt beeinflußbaren Parametern des Glasschmelzprozesses als Steuergröße(n) zu benutzen, insbesondere natürlich auch den vertikalen und/oder horizontalen Gasbrennerlanzen-Anstellwinkel. Dabei wird die jeweilige Steuergröße bevorzugterweise dazu verwendet, hiermit einen konventionellen bekannten Regler (also etwa einen PID, PI, PD-Regler etc.) in einem untergelagerten Regelkreis - also etwa einem Regelkreis zur Regelung der Einlegefrequenz der Einlegemaschine - anzusteuern, der selbst wiederum die Steuergröße des modellbasierten prädiktiven Regelsystems als seine eigene Führungsgröße verwendet (Kaskadenregelung).

Ein solches modellbasiertes prädiktives Regelsystem kann somit den jeweiligen Sollwert seiner Steuergröße(n) fortlaufend automatisch anpassen und dies - jedenfalls sobald es hinreichend an den automatisch zu führenden Glasschmelzprozeß angepaßt ist - in der Regel ohne, daß es hierzu noch manueller menschlicher Eingriffe in die von diesem Regelsystem selbsttätig beeinflußten Steuergrößen bedarf. Auf diese Weise können etwa mehrere Steuergrößen, wie Stromeintrag in die Glasschmelze (sogenanntes Boosting mit Hilfe der Booster-Elektroden, siehe oben), die Brennstoffmenge für die Gasbrenner, und natürlich der oder die vertikale(n) Anstellwinkel der Gasbrenner gleichzeitig fortlaufend während des Betriebes der Glasschmelzwanne automatisch als Steuergröße(n) beeinflußt und optimiert werden, etwa um den Gesamtenergieeintrag oder die Energiekosten zu regeln.

Durch die Nutzung eines Gasbrenners, der als ein Mittel zur Verstellung des vertikalen Anstellwinkels der Gasbrennerlanze ein automatisch verstellbares Stellelement aufweist, etwa erfindungsgemäß einen an die Gasbrennerlanze angelenkten Spindeltrieb mit einem positionierbaren Motor (z.B. einen Stellmotor) - etwa einen (Fein-)schrittmotor -, der bei Verstellung die Gasbrennerlanze in der Vertikalen um eine - vorzugsweise an einer Düsenspitze der Gasbrennerlanze gelegene - Drehachse dreht und so den vertikalen Anstellwinkel der Gasbrennerlanze verstellt, ist der jeweilige Anstellwinkel dem verwendeten Regelsystem bekannt und kann in dessen mathematischem Modell berücksichtigt werden.

Auch kann natürlich im Falle der Verwendung eines solchen Gasbrenners, der den Anstellwinkel automatisch zu variieren erlaubt, auch eine echte Messung dieses Anstellwinkels - etwa über einen Drehwinkelgeber oder anderen Positionsgeber - erfolgen und dann als Rückmeldung des jeweiligen Istwerts dieser MPC-Regelgröße, also des tatsächlichen jeweiligen Brennerwinkels, in das modellbasierte Regelsystem zurückfließen. All dies gilt - soweit der entsprechende Gasbrenner auch automatische Stellmittel zur Verstellung des horizontalen Anstellwinkels der Gasbrennerlanze aufweist, wie dies für einen Gasbrenner nach der vorliegenden Erfindung vorgesehen ist - für den horizontalen Anstellwinkel der Gasbrennerlanze entsprechend, wobei zum horizontalen Anstellwinkel der Gasbrennerlanze ergänzend anzumerken ist, daß dieser vorzugsweise bis zu fünf Grad, sowohl nach rechts als auch um fünf Grad nach links verstellbar ausgestaltet ist.

Vorzugsweise werden also in ständiger Wiederholung
- die Istwerte der Regelgrößen (X-Wert, z.B. Temperatur) erfaßt,
- eine Korrelation des Istwertes der Regelgrößen (X-Werte) mit den aktuellen (gemessenen) Brennerwinkeln (hier ebenfalls als X-Wert) durchgeführt,
- ein Vergleich des Istwertes der Regelgrößen (X-Wert) entsprechend einem/mehreren mathematischen Modell/-en, welche(s) die Abhängigkeit der sonstigen Regelgrößen (X-Wert) - außer den Brennerwinkeln - von den (gemessenen) Brennerwinkeln (hier wieder als X-Wert) abbildet, ausgeführt, und
- es erfolgt weiterhin eine Korrektur der Regelgrößen (X-Wert) durch Veränderung der Steuergröße Brennerwinkel (hier als Y-Wert) entsprechend dem verwendeten mathematischen Modell des Glasschmelzprozesses.

Die fortlaufende Erfassung der jeweiligen Brennerwinkel (hier als sogenannter X-Wert) und die Korrelation mit den bereits oben angeführten Prozeßparametern des Glasschmelzprozesses kann dazu genutzt werden, diese Stellgrößen auch während des automatischen Betriebs der Glasschmelzwanne fortlaufend ergänzend in den bereits arbeitenden Regelkreis - diesen anpassend (also adaptiv) - einfließen zu lassen.

So können nach der vorliegenden Erfindung Regelgrößen kontinuierlich und vorzugsweise auch in Abhängigkeit des vertikalen oder zudem auch des horizontalen Stellwinkels aller Gasbrennerlanzen erfaßt und mittels eines modellbasierten oder gegebenenfalls auch anderen softwarebasierten Systems, das sich gehobener Methoden der Prozeßführung bedient (APC-System), teilweise oder vollständig geregelt werden, wobei ein solches System, abhängig vom jeweiligen Ziel der Führung des Glasschmelzprozesses, auch die koordinierte gleichzeitige Erfassung verschiedener (MPC-)Regelgrößen einerseits (z.B. Temperatur), als auch (MPC-)Steuergrößen (gegebenenfalls auch direkt der Stellgrößen) andererseits (z.B. Y-Stellausgang für die Einlegemaschine oder Stellausgang für die Oszillation) erlaubt, was neben oder im Zusammenspiel mit anderen bereits vorhandenen Regelkreisen zumindest teilweise, vorzugsweise vollständig über die (voll-)automatische Einstellung des jeweiligen vertikalen Brennerwinkel der Brennerlanzen geschieht.

So kann etwa eine solche modellbasierte Regelung nach der vorliegenden Erfindung, welche den Energieeintrag (auf einen Sollwert; W-Wert) regelt, die positiven Änderungen der Temperaturen im Brennraum und Glasbad (Y-Wert+) bei Erhöhung des vertikalen Anstellwinkels der Gasbrennerlanze(n) erkennen und den Energieeintrag (Gas und Strom, Y-Wert) absenken. Dadurch wird der Anstieg der Brennraum- und Glasbadtemperatur aufgefangen und beide Regelgrößen werden auf dem Sollwert gehalten (W-Wert konstant). Mit abnehmenden Brenner-Anstellwinkel verläuft der Prozeß sinngemäß umgekehrt. Hierbei wird somit Energie eingespart, wobei jedoch die langfristig Folge der hierdurch eintretenden Abkühlung der Regeneratoren zu berücksichtigen ist, die den vorgenannten Einspareffekt dämpft.

Gleichwohl kann die kontinuierliche Erfassung und Regelung des Brenner-Anstellwinkels mit Hilfe eines modellbasierten prädiktiven Regelungsverfahrens nach der vorliegenden Erfindung helfen, einen für den Schmelzprozeß möglichst günstigen Regelzustand für die jeweilig aktuell vorliegende Beheizungssituation der Glasschmelzwanne zu ermitteln und auch tatsächlich zu erreichen, was im Gegensatz zu der bislang üblichen herkömmlichen Fahrweise des Schmelzprozesses vermittels manueller Reglersollwertvorgaben - etwa über ein Prozeßleitsystem -, bei der die Regelgrößen solange auf den gleichen unveränderten Sollwert eingeregelt werden bis ein erneuter manueller Eingriff erfolgt, so kaum möglich ist.

Eine Ausführungsform der vorliegenden Erfindung, die sich einer modellbasierten prädiktiven Regelung bedient, erlaubt damit eine vollautomatische Regelung des jeweiligen vertikalen Anstellwinkels der Gasbrennerlanze, die die Wirkung auf den oder die jeweiligen Glasschmelzprozeßparameter im Betrieb der Glasschmelzwanne automatisch korrigiert und vorzugsweise auch fortschreitend optimiert.

Der optimale Regelzustand hängt dabei vom jeweiligen Ziel der modellbasierten Regelung ab und kann etwa darauf ausgerichtet sein, einen möglichst niedrigen Energieverbrauch zu gewährleisten und/oder auch möglichst niedrige Energiekosten (bei bekanntem Preis für die jeweilige Einheit eines jeweiligen Energieträgers, etwa Gas und/oder Strom) zu erreichen.

Im folgenden werden nicht einschränkend zu verstehende Ausführungsbeispiele anhand der Zeichnung besprochen. In dieser zeigen:
- Fig. **1**: eine perspektivische Ansicht einer regenerativen U-Flammenwane im Aufriß von schräg oben betrachtet,
- Fig. **2**: eine schematische Ansicht der zyklischen Beheizung der regenerativen U-Flammenwanne nach Fig. **1** in Aufsicht von oben her betrachtet,
- Fig. **3**: eine schematische Seitenansicht eines Gasbrenners für die U-Flammenwanne nach Fig. **1** nach dem Stand der Technik,
- Fig. **4**: eine schematische Darstellung der kurzzeitigen und langzeitigen Effekte der Veränderung des vertikalen Anstellwinkels einer Gasbrennerlanze auf den Glasschmelzprozeß, und
- Fig. **5**: eine schematische Darstellung von Asymmetrien in der Gemengeabdeckung des Glasbades und deren Reduktion nach dem Verfahren der vorliegenden Erfindung durch Veränderung des vertikalen Anstellwinkels der Gasbrennerlanzen.

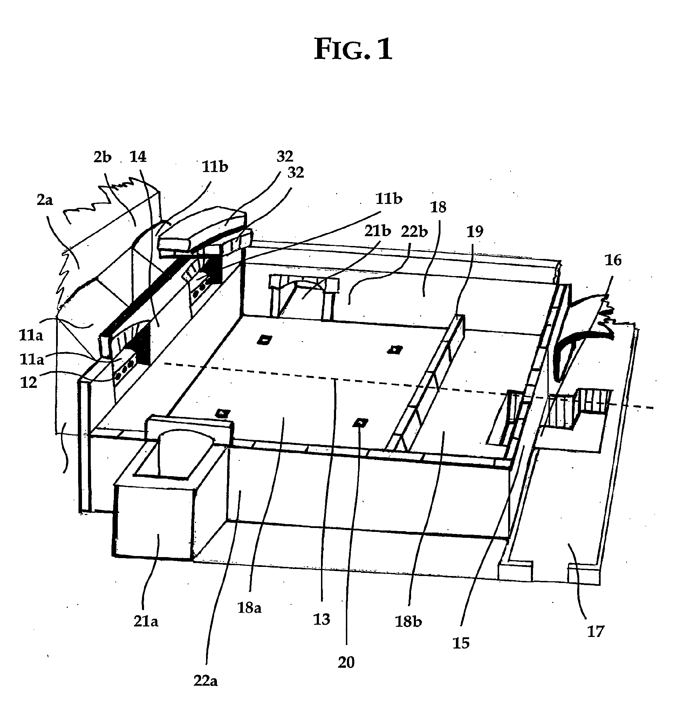

Fig. **1** zeigt eine perspektivische Ansicht einer regenerativen U-Flammenwane im Aufriß von schräg oben betrachtet.

Die Beheizung der regenerativen U-Flammenwanne erfolgt hier durch je drei Gasbrennerlanzen, die hier selbst nicht zu sehen sind, sondern deren Düsenspitze durch je einen Brennerstein **12** in den Brennraum der Glasschmelzwanne mündet, welche jeweils rechts und links quer zur (gedachten) Mittelachse **13** der Schmelzwanne - von oben her in Aufsicht auf die Wanne gesehen - in Reihe unterhalb eines Brennerhalses **11a, 11b** installiert sind, also mit jeweilig einer Feuerungsseite links und einer anderen Feuerungsseite rechts von der vorgenannten Mittelachse **13** gelegen. Die Glasschmelzwanne ist nach oben hin von einem Gewölbe **32** bedeckt, das hier nur in einem kleinen Ausschnitt links oben dargestellt ist, um die Sicht auf das Innenleben der U-Flammenwanne hier nicht zu verdecken.

Die Brennerlanzen der U-Flammenwanne sind vorzugsweise oberhalb des Glasbades (hier nicht zu sehen, da unbefüllter Zustand gezeigt) an der Rückwand **14** der Schmelzwanne installiert. Unterhalb der Brennerhälse **11a, 11b** befinden sich hier je drei so genannte Brennersteine **12,** welche sich kegelförmig in Richtung des Brennraumes oberhalb des Glasbades öffnen.

In der Regel ist vor dem Brennerstein 4 auf der dem Brennerraum abgewandten Seite eine mit Kühlrippen versehene Kühlplatte installiert, in der die Brennerspitze mittig passgenau eingesetzt wird.

Die Brennerlanze selbst wird mit Hilfe einer so genannten Brennerhalterung (hier nicht zu sehen, da auf der Rückseite der Wand 14 installiert) fixiert.

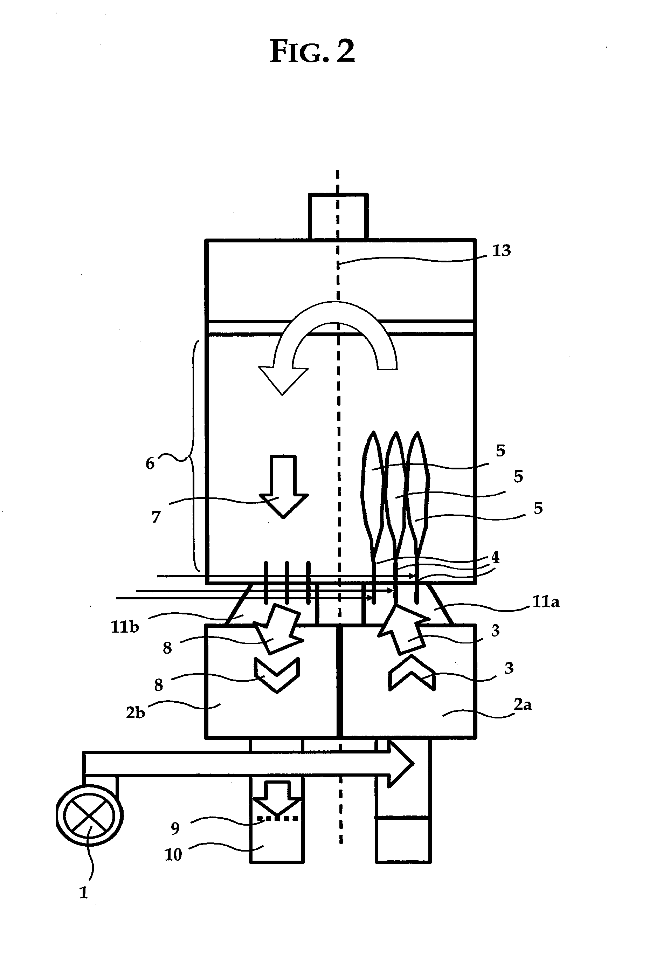

Die Beheizung von regenerativen U-Flammenwannen erfolgt zyklisch durch zwei zeitlich begrenzte Brennzyklen zwischen der rechten und linken Feuerungsseite der Glasschmelzwanne, die sich fortlaufend wiederholt gegenseitig abwechseln. Die Brennzyklen dauern dabei vorzugsweise zwanzig bis fünfundzwanzig Minuten. Nähere Details sind dabei der nachfolgenden Fig. **2** zu entnehmen.

Hinter der Schmelzwanne befinden sich brennerseitig zwei - zumeist rechteckig aufgebaute-Regeneratoren **2a, 2b,** die durch eine (Mittel-)wand (hier nicht zu sehen) voneinander getrennt sind. Die Regeneratoren **2a, 2b** sind über jeweils den ihnen zugehörigen Brennerhals **11a, 11b** mit dem oberhalb des Glasbades gelegenen Brennraum der Schmelzwanne verbunden.

Der bereits erwähnte jeweilige Brennerhals **11a**, **11b** ist ein in Richtung des Brennraumes der Schmelzwanne abgewinkelter Kanal, durch die in dem ihm zugehörigen Regenerator **2a, 2b** vorgewärmte Verbrennungsluft in den Brennraum gelangt, sich dort mit dem Brennstoff vermischt und Flammen (hier nicht zu sehen) erzeugt, die sich vorzugsweise in etwa parallel zur Längsachse **13** des Brennraumes ausdehnen.

Die Regeneratoren (Kammern) **2a, 2b** enthalten eine so genannte Kammergitterung (hier nicht zu sehen). Dabei handelt es sich um Hohlsteine oder Kreuzsteine, welche zu vertikalen Kanälen (Zügen) aufgebaut sind und die Regeneratoren **2a, 2b** bis zur Brennerhalsunterkante ausfüllen.

Das Abgas der Schmelzwanne durchströmt diese Züge in vertikaler Richtung von oben nach unten und gibt einen Großteil der Abgaswärme (bis zu 70%) an diese Hohlsteine ab, wenn die Brenner unterhalb des diesem Regenerator **2a, 2b** zugehörigen Brennerhalses **11a**, **11b** gerade nicht in Betrieb sind. Die Regeneration erfolgt sodann dadurch, daß im darauffolgenden Brennzyklus kalte Verbrennungsluft mittels eines Verbrennungsluftventilators (hier nicht zu sehen) in umgekehrter Richtung durch die aufgeheizten Kammerzüge geleitet wird (vorzugsweise von unten nach oben). Dabei erhitzt sich die Verbrennungsluft und liefert den zur Verbrennung notwendigen Sauerstoff.

Im Brennzyklus von rechts sind die Brenner auf der rechten Seite in Betrieb, werden mit vorgewärmter Verbrennungsluft aus der rechten Kammer **2a** beaufschlagt und geben die Abgaswärme an die gegenüberliegende linke Kammer **2b** ab. Im Brennzyklus von links läuft dieser Vorgang sinngemäß umgekehrt ab.

Der Flammen- und/oder Abgas-Weg im Brennraum beschreibt dabei in etwa die Form eines "U", woraus sich in Verbindung mit dem regenerativen Prinzip die Bezeichnung *"regenerative U-Flammenwanne"* ableitet.

Die Flamme entsteht durch das örtliche Zusammenführen des Brennstoffes, welcher durch eine oder mehrere quer zur Längsachse **13** der Schmelzwanne und oberhalb des Glasbades angebrachte Brenner zugeführt wird und der ca. 10-fachen, im Regenerator **2a, 2b** vorgewärmten Menge an Verbrennungsluft.

Im Brennraum (oberhalb des Glasbades) führt die entstehende Wärme zum Aufschmelzen des Gemenges auf dem Glasbad. Ein Großteil der Wärmemenge wird dabei in die Glasschmelze übertragen.

Auf der den Brennerhälsen **11a**, **11b** gegenüberliegenden Seite der Glasschmelzwanne befindet sich eine abgrenzende Stirnwand **15,** wo auch der Durchlaß **16** des Glasbades zur Arbeitswanne **17** und dann zum Speiser (Riser) hin, also in Richtung der Glasformmaschinen gelegen ist.

Das Becken **18** der Glasschmelzwanne, das das Glasbad aufnimmt, ist innen, durch einen unterhalb des Glasbadspiegels verbleibenden Wall **19** in zwei Bereiche unterteilt, nämlich
- einerseits in die eigentliche Schmelzwanne **18a,** die zur Unterstützung bzw. Beschleunigung des Schmelzprozesses am Boden noch durch Elektrodenlöcher **20** geführte sogenannte Booster-Elektroden zur optionalen zusätzlichen Temperierung aufweist, und
- andererseits den hinter dem Wall **19** zum Durchlaß **16** hin gelegenen Läuterbereich **18b** des Beckens **18,** in dem die Eliminierung störender Gasblasen (CO₂) erfolgt.

Das Gemenge, also der Rohstoff zur Glasherstellung, wird der Glasschmelzwanne hier über zwei einander gegenüberliegende jeweils in einem Einlegebereich - auch Doghouse **21a, 21b** genanntbefindliche Einlegemaschinen (hier nicht zu sehen) zugeführt. Der jeweilige Einlegebereich **21a, 21b** ist je an der Wand **22a, 22b** angeordnet, die senkrecht zu Stirnwand **15** und der Wand **14** steht, die Brenner und Brennerhälse **11a, 11b** aufweist, und zwar in der Nähe der Brenner.

Fig. **2** zeigt eine schematische Ansicht der zyklischen Beheizung der regenerativen U-Flammenwanne nach Fig. **1** in Aufsicht von oben her betrachtet am Beispiel des Brennzyklus für die rechte Feuerungsseite (rechts von der gedachten Mittelachse **13** der Glasschmelzwanne gelegen). Mittels eines Verbrennungsluftventilators **1** wird kalte Verbrennungsluft in den brennseitigen Regenerator **2a** befördert. Dieser ist durch den vorangegangenen Brennzyklus (ca. 20-25 min) vollständig aufgeheizt. Die Verbrennungsluft durchströmt die Gitterungskanäle im Regenerator **2a** von unten nach oben **3.** Dabei erhitzt sie sich auf über 1450°C. Sie strömt über den Brennerhals **12a** in den Brennraum. Zusammen mit dem durch die Brenner **4** zugeführten Brennstoff bilden sich Flammen **5.** Die Hauptenergie der jeweiligen Flamme **5** entfaltet sich in der Regel auf der gegenüberliegenden Seite **6.** Die Abgase **7** strömen nun durch den linken Brennerhals in den linken Regenerator **2b.** Die Strömungsrichtung ist umgekehrt wie auf der gegenüberliegenden, luftführenden Seite **2.** Das Abgas strömt von oben nach unten **8** und heizt den linken Regenerator **2b** auf. Gleichzeitig kühlt sich der brennluftführende Regenerator **2a** schrittweise ab. Die Abgase verlassen den Regenerator **2b** und gelangen über die Wechselanlage **9** in den Abgaskanal **10.** Im nächsten Brennzyklus wird die linke Seite befeuert und die Vorgänge spielen sich in der gleichen Weise spiegelsymmetrisch ab.

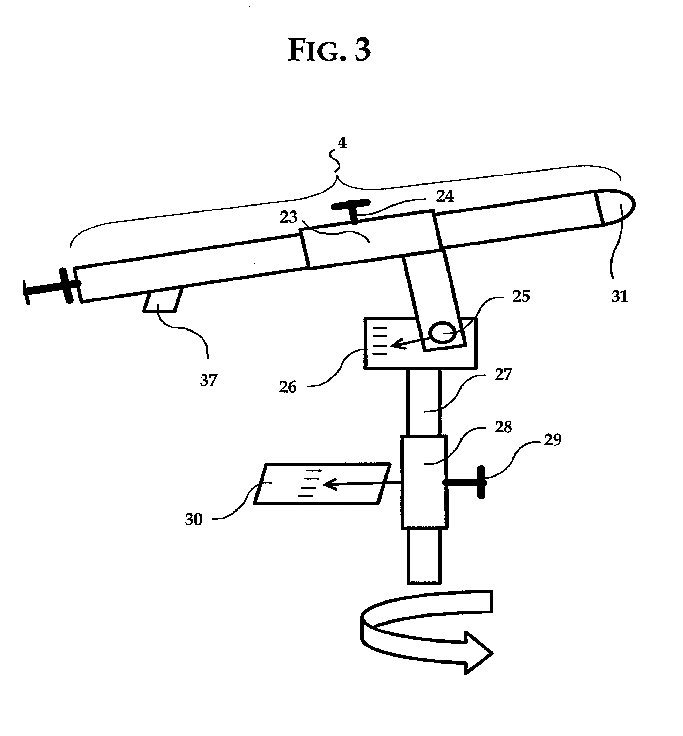

Fig. **3** zeigt eine schematische Seitenansicht eines Gasbrenners für die U-Flammenwanne nach Fig. **1** nach dem Stand der Technik. Die Gasbrennerlanze **4** mit Düsenspitze **31** und Gaszufuhrmitteln **37** - hier einem Stutzen zum Anschluß einer Gasleitung - wird in der Regel auf einer Brennerauflage **23** mittles einer Schraube **24** fixiert. Die Brennerauflage **23** ist über ein bewegliches Gelenk in einem Drehpunkt **25** verbunden. Der Drehpunkt **25** ist mit einer Winkelskalierung **26** versehen. Hieran kann der vertikale Winkel manuell eingestellt und das Gelenk **25** mittels einer zugehörigen Feststellschraube (hier nicht zu sehen) festgestellt werden. Der Brenner ist in der Regel mitsamt der vertikalen Stelleinheit auf einem Rohr-in-Rohrsystem **27, 28** angeordnet. Das Halte-Rohr **27** kann im Führungs-Rohr **28** gedreht und anschließend mit einer Feststellschraube **29** fixiert werden. Dies ermöglicht die manuelle Einstellung des horizontalen Brennerwinkels an einer dortigen Skala **30.** Die Winkeleinstellungen an einem Brenner nach dem Stand der Technik erfolgen somit alle manuell.

Will man einen automatisch einstellbaren Brenner erhalten, so ist es notwendig, als Mittel zur Verstellung des vertikalen Anstellwinkels der Gasbrennerlanze **4** ein automatisch verstellbares Stellelement vorzusehen. Dies kann etwa ein an die Gasbrennerlanze **4** - vorzugsweise an dem der Düsenspitze **31** abgewandten Ende - angelenkter Spindeltrieb mit einem positionierbaren Antrieb - vorzugsweise einem elektrischen (Fein-)schrittmotor - sein, der bei Verstellung die Gasbrennerlanze in der Vertikalen um eine - vorzugsweise im Bereich der Düsenspitze **31** der Gasbrennerlanze **4** gelegenen - Drehpunkt dreht und so den vertikalen Anstellwinkel der Gasbrennerlanze verstellt. Hierzu kann der Brenner nach dem Stand der Technik insoweit modifiziert werden, daß nicht nur ein an der Lanze **4** angelenkter Spindeltrieb mit einem positionierbaren Antrieb vorzusehen ist, sondern auch eine Haltevorrichtung, die die Lanze **4** trägt. Hierzu kann etwa das Rohr-in-Rohr System **27, 28** nach dem Stand der Technik so geändert werden, daß die Feststellschraube **29** entfällt und stattdessen zwei teleskopartig ineinander geführte Rohre unter Gasdruck (ähnlich der Gasdruckfeder eines Bürostuhls) vorgesehen sind, gegen deren Druck der Spindeltrieb arbeitet, wenn er die Gasbrennerlanze **4** an dem der Düsenspitze **31** gegenüberliegenden Ende nach unten bewegt und so für einen positiven vertikalen Anstellwinkel sorgt. Die Brennerauflage **23** sollte dann so ausgestaltet sein, daß sie möglichst nah an der Düsenspitze **31** liegt, um eine Drehung um einen Drehpunkt zu ermöglichen, der in etwa in der Düsenspitze **31** liegt. Das bewegliches Gelenk im Drehpunkt **25** ist frei drehbar zu halten, also nicht mehr mit einer Feststellschraube zu versehen. Zudem kann das Drehgelenk zum Drehpunkt **25** in einem - vorzugsweise bogenförmig ausgestalteten - Langloch frei beweglich geführt sein, um die Drehbewegung der Lanze **4** um einen Punkt in ihrer Düsenspitze **4** nicht zu behindern.

Damit die Gasbrennerlanze **4** auch in ihrem horizontalen Anstellwinkel automatisch verstellbar wird, kann der Spindeltrieb, der an der Gasbrennerlanze **4** auf der der Düsenspitze **31** abgewandten Seite (beweglich) angelenkt ist am Boden auf einer (kreis-)bogenförmigen Schiene automatisch verfahrbar (etwa mittels eines weiteren positionierbaren Antriebs mit Antriebsrollen am Boden oder auch Zahnrädern, etwa wenn die bogenförmige Schiene am Boden als Zahnstange ausgeführt ist) angeordnet sein. Gleiches gilt für das als Teleskopgasdruckfeder ausgestaltete Rohr-in-Rohr-System, welches an seinem Fuß am Boden frei beweglich auf einer ebenfalls (kreis-)bogenförmigen Schiene zu führen ist, damit auch dieses jeder horizontalen Drehbewegung um den Drehpunkt in der Düsenspitze **31** frei beweglich folgen kann.

Sowohl die Ausgestaltung der vertikalen, wie auch der horizontalen automatischen Verstellvorrichtung des Gasbrenners kann auch (jeweils) anders als vorstehend beschrieben erfolgen. Jedwede mechanisch funktionsfähige Lösung ist hier geeignet. Es versteht sich, daß hier dem Fachmann nahezu unendlich viele Möglichkeiten der mechanischen und/oder elektrotechnischen/elektronischen Realisierung offen stehen. Für die vorliegende Erfindung kommt es auf diese tatsächliche Ausgestaltung aber nicht an. Wichtig hierfür ist lediglich, daß eine solche automatische Verstellbarkeit des vertikalen und vorzugsweise auch des horizontalen Anstellwinkels der Gasbrennerlanze überhaupt vorgesehen wird. Vermittels des so ausgestalteten erfindungsgemäßen Brenners kann dann das erfindungsgemäße Verfahren ausgeführt werden.

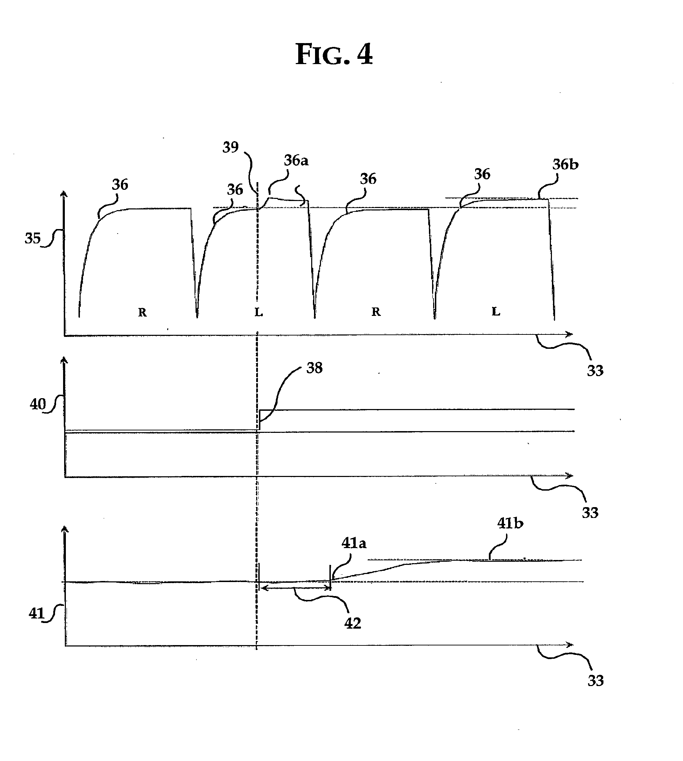

Fig. **4** zeigt eine schematische Darstellung der kurzzeitigen und langzeitigen Effekte der Veränderung des vertikalen Anstellwinkels einer Gasbrennerlanze auf den Glasschmelzprozeß.

Im oberen Teil der Darstellung ist auf der dortigen x-Achse horizontal die Zeit **33** aufgetragen und vertikal auf der y-Achse die Gewölbetemperatur **35** einer U-Flammenwanne. Die dargestellten jeweils zyklisch über die Zeit verlaufenden Temperaturkurven **36** entsprechen jeweils den mittels der Brenner der U-Flammenwanne einmal auf der rechten **R** und zum anderen Male auf der linken **L** Feuerungsseite der U-Flammenwanne spiegelbildlich betriebenen Brennzyklen **R, L.** Das im zweiten Zyklus **L** während der Feuerung auf der linken Seite erfolgte Anheben des Brennerwinkels **38** zum Zeitpunkt **39,** also das Richten der Flamme nach oben in Richtung des Gewölbes der Glasschmelzwanne bewirkt unmittelbar einen Anstieg der Temperatur **36a** des Brennraumes (Gewölbetemperatur) und zwar noch während des laufenden Brennzyklus **L** (kurzzeitiger Effekt). Im Verlaufe mehrerer nachfolgender wechselseitiger Feuerzyklen stabilisiert sich die Brennraumtemperatur dann auf höherem Niveau **36b** (langzeitiger Effekt). Diese Veränderung basiert ausschließlich auf einer Umstellung des vertikalen Brennerwinkels **40.** Der Energieeintrag ist unverändert. Die Erhöhung der Anstellwinkels **40** resultiert in der Zunahme der Brennraumtemperatur **35.** Dadurch erhöht sich jedoch auch die Rückstrahlung des Brennraumgewölbes auf das Glasbad.

Im mittleren Diagramm der hiesigen Darstellung ist auf der x-Achse wiederum die Zeit **33** aufgetragen und auf der y-Achse der vertikale Anstellwinkel **40** der Gasbrennerlanze(n) der linken Feuerungsseite der U-Flammenwanne. Zum Zeitpunkt **39** ist hier die Anhebung **38** des vertikalen Anstellwinkels zu sehen.

Im unteren der drei Diagramme ist auf der x-Achse abermals die Zeit **33** und auf der y-Achse die Bodentemperatur im Glasbad **41** aufgetragen. Infolge der Erhöhung der Rückstrahlung des Brennraumgewölbes auf das Glasbad steigt **41a** mit einem zeitlichen Verzug (Totzeit) **42** auch die Glasbadtemperatur **41** trotz gleichem Energieeintrag auf ein höheres Niveau **41b.** In der Phase ab dem Anstieg **41a** der Glasbadtemperatur kann der Energieeintrag gesenkt werden, um den ansonsten (langfristig eintretenden) Anstieg des Glasbadtemperaturniveaus **41b** zu kompensieren.

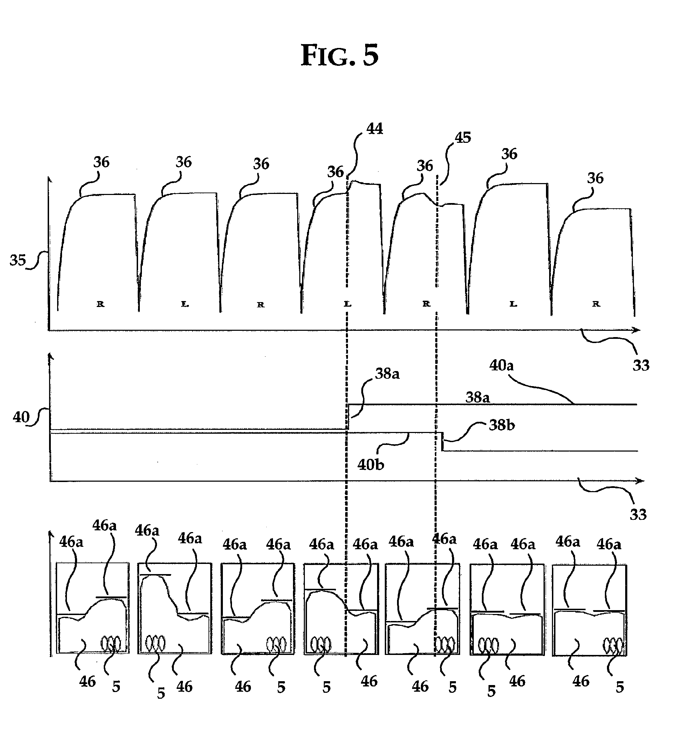

Fig. **5** zeigt eine schematische Darstellung von Asymmetrien in der Gemengeabdeckung des Glasbades und deren Reduktion nach dem Verfahren der vorliegenden Erfindung durch Veränderung des vertikalen Anstellwinkels der Gasbrennerlanzen.

Auch hier ist im oberen, mittleren und unteren Diagramm der Darstellung auf der dortigen x-Achse horizontal jeweils die Zeit **33** aufgetragen.

Im oberen Diagramm ist vertikal auf der y-Achse wiederum die Gewölbetemperatur **35** der U-Flammenwanne aufgetragen. Die hier wiederum dargestellten jeweils zyklisch über die Zeit verlaufenden Temperaturkurven **36** entsprechen abermals jeweils den mittels der Brenner der U-Flammenwanne einmal auf der rechten **R** und zum anderen Male auf der linken **L** Feuerungsseite der U-Flammenwanne spiegelbildlich betriebenen Brennzyklen **R, L.**

Im mittleren Diagramm der Darstellung hier ist auf der y-Achse der vertikale Anstellwinkel **40** der Gasbrennerlanze(n) sowohl der linken Feuerungsseite (obere Kurve **40a**), als auch der rechten Feuerungsseite (untere Kurve **40b**) der U-Flammenwanne zu sehen. Zum Zeitpunkt **44** ist die Anhebung (erhöhung) **38a** des vertikalen Anstellwinkels der Gasbrennerlanze(n) der linken Feuerungsseite zu sehen und zum weiteren Zeitpunkt **45** die Absenkung (Reduktion) **38b** des vertikalen Anstellwinkels der Gasbrennerlanze(n) der rechten Feuerungsseite.

Der untere Teil der Darstellung zeigt eine schematische Darstellung der Asymmetrie in einer Aufsicht von oben her auf das Glasbad und in Umrissen das darauf schwimmende Gemenge, sowie die jeweils während des Zyklus in Betrieb befindlichen (drei) Gasbrenner (symbolisiert durch schematisch angedeutete Flammen **5** in ihren Umrissen).

Im vorliegenden Beispiel liegt eine asymmetrische Gemengeeinlage auf der Glasbadoberfläche vor (jeweils kurvig umrandete Fläche = Gemenge **46**). Während der ersten drei Feuerzyklen erfolgt kein Ausgleich im Hinblick auf die Symmetrie der Gemengeabdeckung. Auf der jeweiligen Feuerseite bildet sich jeweils ein größerer Überschuß von auf dem Glasbad schwimmenden Gemenge **46.**

Im vierten Zyklus bei Feuer links **L** wird zu dem ersten Zeitpunkt **44** der Anstellwinkel der linken Brenner **40a** erhöht **38a.** Infolge dessen steigt die Brennraumtemperatur, das Gemenge schmilzt besser ab. Durch die Erhöhung der Brennerwinkel **40a** sinkt auch der sogenannte *'Schubimpuls'* der Flammen auf die Gemengehaufen. Das Gemenge bleibt weiter hinten, was an den durch waagerechte Linien skizzierten Gemengeabdeckunggrenzen **46a** zu sehen ist. Da die Masse an eingeschobenem Gemenge jedoch konstant ist und die gleiche Oberfläche einnimmt, verlagert sich das Gemenge mehr nach rechts. Durch die zum zweiten Zeitpunkt **45** anschließende Reduktion **38b** der rechten Brennerwinkel **40b** wird der *'Schubimpuls'* auf das rechtsliegende Gemenge erhöht. Dieses schwimmt nun weiter vor. Dadurch sinkt die Masse an Gemenge auf der linkern Seite weiter ab. Nach mehreren Wechseln der Brennzyklen **R, L** ist die Asymmetrie behoben. Die Brenner können nun wieder gleich eingestellt werden. Die Beseitigung der Asymmetrien erfolgt durch automatische Aufnahme und Auswertung der Gemengelage mittels eines Kamerasystems unter Verwendung des Verfahrens nach der vorliegenden Erfindung, vorzugsweise unter Einsatz einer modellbasierten prädiktiven Regelung, die zumindest die jeweilige Gemengeabdeckung auf rechter gegenüber linker Feuerungsseite als Regelgröße erfaßt und die jeweiligen vertikalen Brennerwinkel als Steuergrößen verwendet. Durch die Beseitigung von Asymmetrien, wie hier dargestellt, kann die Durchstrahlung des Glasbades erhöht werden. Infolge dessen steigen die Glasbadtemoeraturen an und der Energieeintrag kann gesenkt werden.

## Patentansprüche

1. Verfahren zur Betriebsoptimierung einer als regenerative U-Flammenwanne mit zwei Feuerungsseiten ausgebildeten Glasschmelzwanne zur Glasherstellung mit Gasbrennern zur Temperierung eines in der Glasschmelzwanne befindlichen Glasbades, wo zumindest eine Gasbrennerlanze **(4)** der Gasbrenner in ihrem vertikalen Anstellwinkel automatisch verstellbar ist, **dadurch gekennzeichnet, daß** während des Betriebes der Glasschmelzwanne der vertikale Anstellwinkel **(40)** zumindest einer der Gasbrennerlanzen **(4)** der Gasbrenner zur Beeinflussung der Oberflächenbedeckung des Glasbades mit Gemenge **(46)** automatisch verstellt wird.

2. Verfahren zur Betriebsoptimierung einer als regenerative U-Flammenwanne mit zwei Feuerungsseiten ausgebildeten Glasschmelzwanne zur Glasherstellung nach Anspruch 1, **dadurch gekennzeichnet, daß** die automatische Verstellung des vertikalen Anstellwinkels **(40)** zumindest einer der Gasbrennerlanzen **(4)** so beeinflußt wird, daß Asymmetrien in der Oberflächenbedeckung des Glasbades mit Gemenge **(46)** zwischen den beiden den Feuerungsseiten entsprechenden Bereichen des Glasbades in der U-Flammenwanne reduziert werden.

3. Verfahren zur Betriebsoptimierung einer als regenerative U-Flammenwanne mit zwei Feuerungsseiten ausgebildeten Glasschmelzwanne zur Glasherstellung nach Anspruch 2, **dadurch gekennzeichnet, daß** die Asymmetrien in der Oberflächenbedeckung des Glasbades mit Gemenge **(46)** zwischen den beiden den Feuerungsseiten entsprechenden Bereichen des Glasbades in der U-Flammenwanne reduziert werden,
indem auf der Feuerungsseite der U-Flammenwanne, wo eine größere Bedeckung **(46)** des Glasbades vorliegt,
eine Erhöhung des vertikalen Anstellwinkels **(40)** zumindest einer der Gasbrennerlanzen **(4)** auf dieser Feuerungsseite erfolgt; und/oder
indem auf der jeweiligen anderen Feuerungsseite der U-Flammenwanne, wo eine geringere Bedeckung des Glasbades **(46)** vorliegt,
eine Verminderung des vertikalen Anstellwinkels **(46)** zumindest einer der Gasbrennerlanzen **(4)** auf der dortigen Feuerungsseite erfolgt
und zwar solange,
bis die Asymmetrie in der Oberflächenbedeckung durch Gemenge **(46)** zwischen den beiden den Feuerungsseiten entsprechenden Bereichen des Glasbades unter ein festgelegtes Maß gesunken ist.

4. Verfahren zur Betriebsoptimierung einer als regenerative U-Flammenwanne mit zwei Feuerungsseiten ausgebildeten Glasschmelzwanne zur Glasherstellung nach Anspruch 1, 2 oder 3, **dadurch gekennzeichnet, daß** während des Betriebes der Glasschmelzwanne der vertikale Anstellwinkel **(40)** zumindest einer der Gasbrennerlanzen (4) der Gasbrenner auch zur Beeinflussung zumindest eines weiteren Glasschmelzprozeßparameters automatisch verstellt wird.

5. Verfahren zur Betriebsoptimierung einer als regenerative U-Flammenwanne mit zwei Feuerungsseiten ausgebildeten Glasschmelzwanne zur Glasherstellung nach einem der Ansprüche 1 bis 4, **dadurch gekennzeichnet, daß** zumindest auch eine Gasbrennerlanze **(4)** der Gasbrenner in ihrem horizontalen Anstellwinkel automatisch verstellbar ist, wobei während des Betriebes der Glasschmelzwanne auch der horizontale Anstellwinkel zumindest einer der Gasbrennerlanzen **(4)** der Gasbrenner zur Beeinflussung zumindest eines Glasschmelzprozessparameters automatisch verstellt wird.

6. Verfahren zur Betriebsoptimierung einer als regenerative U-Flammenwanne mit zwei Feuerungsseiten ausgebildeten Glasschmelzwanne zur Glasherstellung nach Anspruch 5, **dadurch gekennzeichnet, daß** während des Betriebes der U-Flammenwanne auch der horizontale Anstellwinkel zumindest einer der Gasbrennerlanzen (4) der Gasbrenner zur Beeinflussung der Oberflächenbedeckung des Glasbades mit Gemenge **(46)** in der U-Flammenwanne automatisch verstellt wird.

7. Verfahren zur Betriebsoptimierung einer als regenerative U-Flammenwanne mit zwei Feuerungsseiten ausgebildeten Glasschmelzwanne zur Glasherstellung nach einem der Ansprüche 1 bis 6, **dadurch gekennzeichnet, daß** als Glasschmelzprozessparameter zumindest einer der nachfolgenden Parameter dient:
- Temperatur(-en) im Gewölbe der Glasschmelzwanne,
- Boden-Temperatur(-en) der Glasschmelzwanne,
- Temperatur(-en) der Glasschmelze am Speiser der Glasschmelzwanne,
- Kammer-Temperaturen(-en) der Regeneratoren der Glasschmelzwanne;
- Abgaskanaltemperatur(-en) im Abgaskanal der Glasschmelzwanne,
- Oberflächenbedeckung des Glasbades in der Glasschmelzwanne mit Gemenge,
- Gasmenge,
- Stromeintrag/Booster-Leistung(-en),
- Gesamtenergieeintrag,
- Energiekosten bei bekanntem Preis pro Energieeinheit beteiligter Energieträger,
- Glasqualität anhand einer bestimmten Gispenzahl pro Volumeneinheit im erzeugten Glas.

8. Verfahren zur Betriebsoptimierung einer als regenerative U-Flammenwanne mit zwei Feuerungsseiten ausgebildeten Glasschmelzwanne zur Glasherstellung nach einem der Ansprüche 1 bis 7, **dadurch gekennzeichnet, daß** die Betriebsoptimierung durch Beeinflussung zumindest eines der Glasschmelzprozessparameter über die automatische Verstellung des vertikalen Anstellwinkels **(40)** zumindest einer der Gasbrennerlanzen **(4)** der Gasbrenner während des Betriebes der Glasschmelzwanne im Wege einer Regelung erfolgt, bei der zumindest einer der Glasschmelzprozessparameter als Regelgröße sowie der vertikale Anstellwinkel **(40)** zumindest einer der Gasbrennerlanzen **(4)** der Gasbrenner als Steuer- oder Stellgröße dient.

9. Verfahren zur Betriebsoptimierung einer als regenerative U-Flammenwanne mit zwei Feuerungsseiten ausgebildeten Glasschmelzwanne zur Glasherstellung nach Anspruch 8 soweit dieser auf Anspruch 5 rückbezogen ist, **dadurch gekennzeichnet, daß** die Betriebsoptimierung durch Beeinflussung zumindest eines der Glasschmelzprozessparameter auch über die automatische Verstellung des horizontalen Anstellwinkels zumindest einer der Gasbrennerlanzen **(4)** der Gasbrenner während des Betriebes der Glasschmelzwanne im Wege einer Regelung erfolgt, bei der zumindest einer der Glasschmelzprozessparameter als Regelgröße sowie der horizontale Anstellwinkel zumindest einer der Gasbrennerlanzen **(4)** der Gasbrenner als Steuer- oder Stellgröße dient.

10. Verfahren zur Betriebsoptimierung einer als regenerative U-Flammenwanne mit zwei Feuerungsseiten ausgebildeten Glasschmelzwanne zur Glasherstellung nach Anspruch 8 oder 9, **dadurch gekennzeichnet, daß** zumindest einer der Glasschmelzprozessparameter als Führungsgröße der Regelung dient.

11. Verfahren zur Betriebsoptimierung einer als regenerative U-Flammenwanne mit zwei Feuerungsseiten ausgebildeten Glasschmelzwanne zur Glasherstellung nach einem der Ansprüche 8 bis 10, **dadurch gekennzeichnet, daß** bei der Regelung eine modellbasierte prädikative Regelung - sogenannte MPC - verwendet wird.

12. Gasbrenner für eine Glasschmelzwanne zur Durchführung des Verfahrens nach einem der Ansprüche 1 bis 11, mit einer Gasbrennerlanze **(4)** und Mitteln **(25)** zur Verstellung des vertikalen und des horizontalen Anstellwinkels **(40)** der Gasbrennerlanze **(4),** Gaszufuhrmitteln **(37)** zur Gasbrennerlanze **(4)** sowie Haltemitteln **(27, 28, 29)** zur Halterung des Gasbrenners im Verhältnis zur Glasschmelzwanne, **dadurch gekennzeichnet, daß** als Mittel **(25)** zur Verstellung des vertikalen wie auch des horizontalen Anstellwinkels **(40)** der Gasbrennerlanze **(4)** ein automatisch verstellbares Stellelement dient.

13. Gasbrenner für eine Glasschmelzwanne nach Anspruch 12, **dadurch gekennzeichnet, daß** als automatisch verstellbares Stellelement zur Verstellung des vertikalen Anstellwinkels **(40)** der Gasbrennerlanze **(4)** ein an die Gasbrennerlanze (4) angelenkter Spindeltrieb mit einem positionierbaren Antrieb - vorzugsweise einem (Fein-)schrittelektromotor - dient, der bei Verstellung die Gasbrennerlanze **(4)** in der Vertikalen um eine - vorzugsweise an einer Düsenspitze **(31)** der Gasbrennerlanze **(4)** gelegene - Drehachse dreht und so den vertikalen Anstellwinkel **(40)** der Gasbrennerlanze **(4)** verstellt.

14. Gasbrenner für eine Glasschmelzwanne zur Durchführung des Verfahrens nach einem der Ansprüche 1 bis 11, mit einer Gasbrennerlanze **(4)** und einem automatisch verstellbaren Stellelement zur Verstellung des vertikalen Anstellwinkels **(40)** der Gasbrennerlanze **(4),** Gaszufuhrmitteln **(37)** zur Gasbrennerlanze **(4)** sowie Haltemitteln **(27, 28, 29)** zur Halterung des Gasbrenners im Verhältnis zur Glasschmelzwanne, **dadurch gekennzeichnet, daß** als automatisch verstellbares Stellelement zur Verstellung des vertikalen Anstellwinkels **(40)** der Gasbrennerlanze **(4)** ein an die Gasbrennerlanze **(4)** angelenkter Spindeltrieb mit einem positionierbaren Antrieb - vorzugsweise einem (Fein-)schrittelektromotor - dient, der bei Verstellung die Gasbrennerlanze **(4)** in der Vertikalen um eine - vorzugsweise an einer Düsenspitze **(31)** der Gasbrennerlanze **(4)** gelegene - Drehachse dreht und so den vertikalen Anstellwinkel **(40)** der Gasbrennerlanze **(4)** verstellt.

15. Gasbrenner für eine Glasschmelzwanne nach Anspruch 14, **dadurch gekennzeichnet, daß** der Gasbrenner auch automatische Stellmittel zur Verstellung des horizontalen Anstellwinkels der Gasbrennerlanze **(4)** aufweist.
